# EUROPEAN PATENT APPLICATION

(11) **EP 3 035 251 A2**
(43) Date of publication of application: **22.06.2016**
(21) Application number: 14199284.2
(22) Date of filing: 19.12.2014
(51) Int. Cl.: G06N 7/00

(54) **Markov chain generation apparatus**

(30) Priority: 15.12.2014 EP 14198002
(71) Applicant: Siemens Aktiengesellschaft, 80333 München (DE)
(72) Inventor: Montrone, Francesco, 85521 Riemerling (DE); Kaukewitsch, Christof, 81479 München (DE)

(57) **Abstract**

A Markov chain generation apparatus (1) adapted to generate a Markov chain data model, MCDM, of a technical system (2) consisting of system components (c), wherein each system state of said technical system (2) is represented by a Markov state expressed by a Boolean Markov state bit vector, BMSBV, indicating failure modes of the system components (c) of said technical system (2), said Markov chain generation apparatus (1) comprising a memory (1A) which stores component failure rates (λ) of the system components (c) and a calculation unit (1B) adapted to generate recursively starting from an initial Markov state of the technical system (2) intermediate Markov states assigned to reference states added to a reference state list, RSL, stored in said memory (1A) until a terminal Markov state of said technical system (2) is reached.

## Description

The invention relates to a method and apparatus for generation of a Markov chain data model of a technical system.

Complex technical systems can comprise a plurality of different system components. The determination of reliability and availability properties of complex technical systems during their operation lifetime includes the identification of relevant system states as well as the determination of transitions in-between these states and the calculation of corresponding state probabilities. Technical systems may consist of a significant number of system components that may undergo faults or repairs. Fault trees are well-established for illustrating the structural relationships between causes and effects in reliability analysis. Fault tree analysis, FTA, relates to the identification and analysis of conditions and factors that cause or contribute to the occurrence of a defined top event. Failures observed in a physical system can be linked to a wide variety of different causes. In general, failures can be classified as being either systematic failures or being random failures. Systematic failures can originate from a failure of a system component due to inadequate design, manufacturing, operation or maintenance.

In order to compute a reliability of a technical system, it is necessary to evaluate the reliability characteristics of its individual system components. This can be described by means of their failure rate λ(t) for a population of identical components.

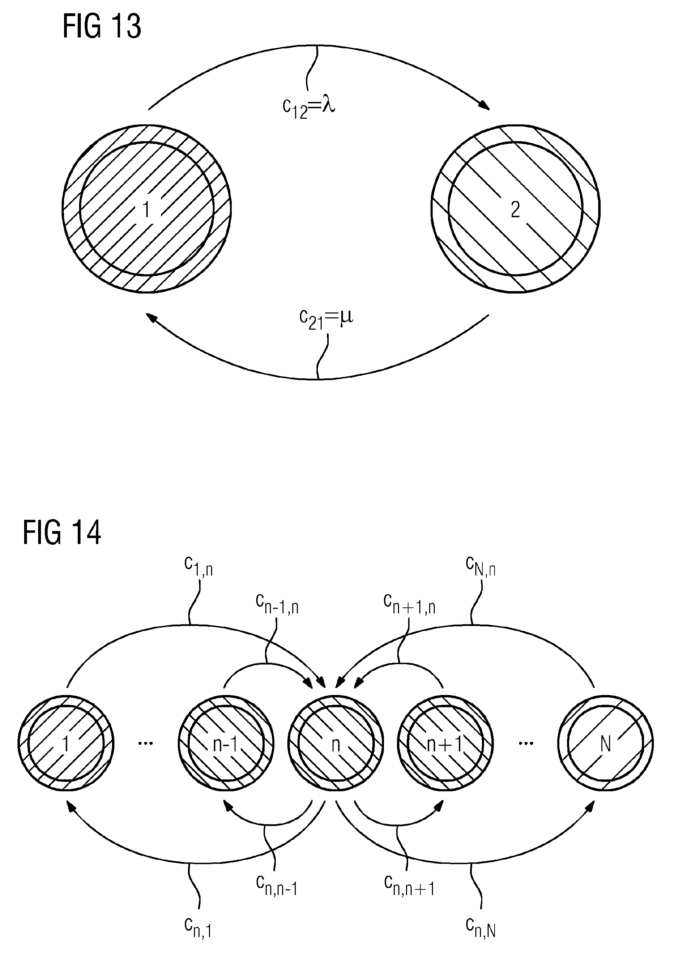

Further, Markov chains are widely used as statistical models of real-world processes. A Markov chain comprises transitions from one state to another state, between a finite number of states. Transition rates to a subsequent state only depend on a current state, not on prior states. Fig. 13 illustrates a simple Markov chain with two states. In the illustrated example, the investigated simple system of interest alternates between a first upstate and a downstate or failure state. The transition from the upstate forming also the initial state of the system to the downstate comprises a constant failure rate λ. The transition from the downstate to the upstate comprises a constant repair rate µ as illustrated in Fig. 13. Fig. 14 illustrates a generic Markov chain with N system states and transitions between the system states. Such a Markov chain can be transformed to a linear system of N differential equations of first order which then can be evaluated.

Up to now, Markov chains for a system to be investigated are created manually. In case of constant transition rates, a linear system of ordinary different differential equations has to be solved to evaluate the system behavior of the technical system. Accordingly, so far, it is required that the creator of a Markov chain such as illustrated in Fig. 14 fully understands the failure phenomena and the resulting consequences of the technical system under investigation. Further, the creator of the Markov chain must also be capable of determining the resulting system states and transitions by its own ingenuity and his capability of overall system abstraction. This implies, inter alia, that the creator of the Markov chain has to recognize and implement any existing system symmetry with respect to failure effects in order to keep the complexity of the created Markov chain manageable. Up to now, there exists no method or apparatus which supports the generation of such a Markov chain. With increasing complexity of the technical system, a manual creation of a Markov chain becomes more time-consuming and/or error prone. It easily happens that system states of the technical system or transitions are omitted or that false transitions are established.

Accordingly, it is object of the present invention to provide a method and apparatus for generating a Markov chain data model of a technical system which can be used for analyzing the system behavior of the technical system and/or controlling system components of the technical system.

This object is achieved by a method comprising the features of claim 1.

The invention provides according to a first aspect a Markov chain generation method for generation of a Markov chain data model of a technical system consisting of system components, wherein each system state of said technical system is represented by a Markov state expressed by a Boolean Markov state bit vector indicating failure modes of the system components of said technical system, wherein starting from an initial Markov state intermediate Markov states are generated recursively and assigned to equivalent reference states added to a reference state list stored in a memory until a terminal Markov state of said technical system is reached.

An advantage of the Markov chain generation method according to the first aspect of the present invention resides in that it allows to automatically construct and evaluate a Markov chain data model contrary to the conventional way of constructing a Markov chain model manually based on human ingenuity. This allows to treat failure phenomena or failures within a technical system with high technical complexity. Further, the method according to the first aspect of the present invention offers a complexity reducing functionality, in particular with symmetric failure mechanisms. With the method according to the first aspect of the present invention, the number of Markov states describing the investigated system is reduced resulting also in a reduction of the processing time.

In a possible embodiment of the Markov chain generation method according to the first aspect of the present invention, the initial Markov state represents a system state of the technical system where all system components of the technical system are operable, wherein the initial Markov state is expressed by a Boolean Markov state bit vector where all failure modes are set to a first logic value (High).

In a further possible embodiment of the method according to the first aspect of the present invention, the terminal Markov state represents a system state of the technical system where all system components of the technical system are inoperable, wherein the terminal Markov state is expressed by a Boolean Markov state bit vector where all failure modes are set to a second logic value (Low).

In a further possible embodiment of the method according to the first aspect of the present invention, a reference state stored in the reference state list which forms a designated failure state of said technical system is not further processed to generate intermediate Markov states.

In a still further possible embodiment of the method according to the first aspect of the present invention, a transition from a source state to a target state with a transition rate corresponding to a failure rate of a system component of said technical system expressed by a bit of the Boolean Markov state bit vector representing the source state is added to a transition list stored in a memory.

In a further possible embodiment of the method according to the first aspect of the present invention, a transition from a source state to a target state is added to the stored transition list after replacing of the target state by its equivalent reference state.

In a still further possible embodiment of the method according to the first aspect of the present invention, transition rates of a group of symmetric or redundant system components of the technical system expressed by a group of bits of the Boolean Markov state bit vector representing a source state are summed up to derive an aggregated transition rate of a transition from the source state of the reference state replacing the target states of the respective transitions.

In a further possible embodiment of the method according to the first aspect of the present invention, the generated Markov chain data model comprising the reference state list and the transition list is transformed automatically to a linear system of differential equations which is evaluated to calculate an availability and/or a reliability of said technical system and/or its system components.

In a still further possible embodiment of the method according to the first aspect of the present invention, the component failure rates of the system components are read from a database and stored in a dedicated array.

In a still further possible embodiment of the method according to the first aspect of the present invention, the generated Markov chain data model of the technical system comprises a time-continuous Markov chain having Markov states including failure states of system components of said technical system.

The invention further provides according to a second aspect a Markov chain generation apparatus comprising the features of claim 11.

The invention provides according to the second aspect of the present invention a Markov chain generation apparatus adapted to generate a Markov chain data model of a technical system consisting of system components, wherein each system state of said technical system is represented by a Markov state expressed by a Boolean Markov state bit vector indicating failure modes of the system components of said technical system, said Markov chain generation apparatus comprising:
a memory which stores component failure rates of the system components and
a calculation unit adapted to generate recursively starting from an initial Markov state of the technical system intermediate Markov states assigned to reference states added to a reference list stored in said memory until a terminal Markov state of said technical system is reached.

In a possible embodiment of the apparatus according to the second aspect of the present invention, the initial Markov state represents a system state of the technical system where all system components of the technical system are operable, wherein the initial Markov state is expressed by a Boolean Markov state bit vector where all failure modes are set to a first logic value.

In a possible embodiment of the apparatus according to the second aspect of the present invention, the terminal Markov state represents a system state of said technical system where all system components of the technical system are inoperable, wherein the terminal Markov state is expressed by a Boolean Markov state bit vector where all failure modes are set to a second logic value.

In a further possible embodiment of the apparatus according to the second aspect of the present invention, a reference state stored in the reference state list which forms a designated failure state of said technical system is not further processed by the calculation unit to generate further intermediate Markov states.

In a still further possible embodiment of the apparatus according to the second aspect of the present invention, a transition from a source state to a target state with a transition rate corresponding to a failure rate of a system component of said technical system expressed by a bit of the Boolean Markov state bit vector representing the source state is added to a transition list stored in a memory.

In a still further possible embodiment of the apparatus according to the second aspect of the present invention, a transition from a source state to a target state is added to the stored transition list after replacing of the target state by its equivalent reference state.

In a still further possible embodiment of the apparatus according to the second aspect of the present invention, transition rates of a group of symmetric or redundant system components of said technical system expressed by a group of bits of the Boolean Markov state bit vector representing a source state are summed up by the calculation unit to derive an aggregated transition rate of a transition from the source state to the reference state replacing the target states of the respective transitions.

In a still further possible embodiment of the apparatus according to the second aspect of the present invention, the generated Markov chain data model comprising the reference state list and the transition list is transformed automatically by the calculation unit or an analyzing unit to a linear system of differential equations which is evaluated to calculate an availability and/or a reliability of the technical system and/or its system components.

In a still further possible embodiment of the apparatus according to the second aspect of the present invention, the component failure rates of the system components are read from a database and stored in a dedicated array.

In a still further possible embodiment of the apparatus according to the second aspect of the present invention, the generated Markov chain data model of the technical system comprises a time-continuous Markov chain having Markov states including failure states of system components of the technical system.

The invention further provides according to a third aspect a technical system comprising the features of claim 19.

The invention provides according to the third aspect a technical system comprising a plurality of system components, wherein each system state of the complex technical system is represented by a Markov state expressed by a Boolean Markov state bit vector indicating failure modes of the system components,
said technical system comprising:
a Markov chain generation apparatus according to the second aspect of the present invention configurable to generate a Markov chain data model of said technical system stored in a database, and
an analyzing unit adapted to transform the generated Markov chain data model in a linear system of differential equations and to evaluate the linear system of differential equations to calculate an availability and/or a reliability of system components of said technical system.

In a possible embodiment of the technical system according to the third aspect of the present invention, the technical system comprises a control unit adapted to control system components of said technical system depending on the calculated availability and/or reliability of the respective system components.

In the following, possible embodiments of the different aspects of the present invention are described in more detail with reference to the enclosed figures.
- Fig. 1: shows a block diagram of a possible exemplary embodiment of a technical system comprising a Markov chain generation apparatus according to an aspect of the present invention;
- Fig. 2: shows a schematic view of a stirring unit as an exemplary technical system analyzed and/or controlled using a Markov chain generation method or Markov chain generation apparatus according to the present invention;
- Fig. 3: shows a schematic top view on the stirring unit illustrated in Fig. 2;
- Fig. 4: illustrates reference states for a one failure transition on one stirrer shaft of a stirring unit illustrated in Figs. 2, 3;
- Fig. 5: shows a schematic diagram for illustrating reference states with two contained failures on one stirrer shaft in the stirring unit as illustrated in Figs. 2, 3;
- Fig. 6: shows a schematic diagram for illustrating reference states for equivalent classes on stirrer lever for the stirring unit as illustrated in Figs. 2, 3;
- Fig. 7: illustrates a Markov chain for contained failures of the stirring unit illustrated in Figs. 2, 3;
- Fig. 8: shows a further schematic diagram for illustrating a reference state generation for a subsystem without redundancy;
- Fig. 9: shows schematically a reference state generation for equivalent subsystems;
- Fig. 10: shows a flowchart for an exemplary embodiment of a Markov chain generation method according to the first aspect of the present invention;
- Fig. 11: illustrates the evolution of a failure rate of a system component over time;
- Fig. 12: shows a system transition between two states in a Markov chain;
- Fig. 13: shows a further schematic diagram for illustrating a simple Markov chain with two different states;
- Fig. 14: shows a schematic diagram for a generic Markov chain with a plurality of system states.

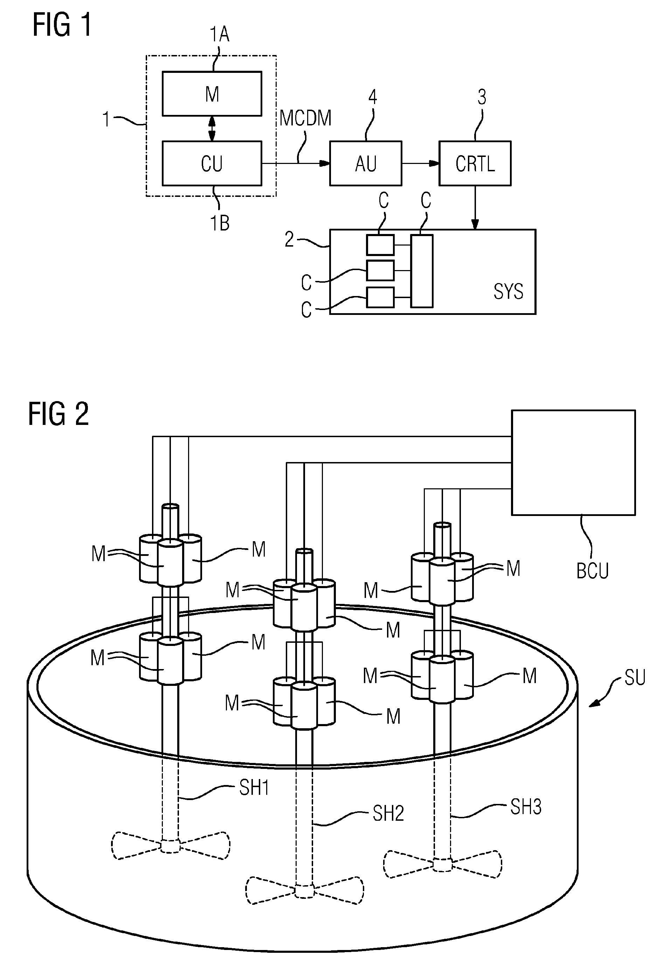

Fig. 1 shows a block diagram for illustrating a possible exemplary embodiment of a Markov chain generation apparatus 1 used to provide a Markov chain data model MCDM which can be further processed to perform control of a complex technical system 2 as shown in Fig. 1. The complex technical system 2 shown in Fig. 1 can comprise a plurality of different components c. The system components c can comprise hardware and/or software components. The system components c can comprise redundant system components performing the same technical function within the system 2. Further, the system 2 can comprise symmetric components. Each system 2 can comprise subsystems which in turn consist of system components c. In the embodiment illustrated in Fig. 1, the complex technical system 2 is controlled by a control unit 3. The control unit 3 can control one or several system components of the technical system. In a possible embodiment, the control unit 3 forms itself a component c of the technical system 2. The control unit 3 can in a possible embodiment comprise one or several microprocessors adapted to perform a control program which controls one or several system components c of the technical system 2. The Markov chain generation apparatus 1 is adapted to generate a Markov chain data model MCDM which can be applied to an analyzing unit 4 as shown in Fig. 1. The Markov chain generation apparatus 1 generates a Markov chain data model MCDM of the technical system 2 consisting of system components c, wherein each system state of the technical system 2 can be represented by a Markov state expressed by a Boolean Markov state bit vector, BMSBV, indicating failure modes of the system components c within the technical system 2. The Markov chain generation apparatus 1 comprises in the shown embodiment a memory 1A which stores component failure rates of the system components c of the technical system 2. The Markov chain generation apparatus 1 further comprises a calculation unit 1B adapted to generate recursively starting from an initial Markov state of the technical system 2 intermediate Markov states assigned to reference states added to a reference state list RSL stored in the memory 1A until a terminal Markov state of the technical system 2 is reached. The initial Markov state represents a system state of the technical system 2 where all system components c of the investigated or controlled technical system 2 are operable. The initial Markov state is expressed in a possible embodiment by a Boolean Markov state bit vector, BMSBV, where all failure modes are set to a first logic value (logic value High). The terminal Markov state represents a system state of the technical system 2 where all system components c of the technical system 2 are inoperable. The terminal Markov state is expressed in a possible embodiment also by a Boolean Markov state bit vector where all failure modes are set to a second logic value (Low logic value). The calculation unit 1B generates the reference state list RSL which can be stored in the memory 1A. Each reference state is stored in the reference state list RSL. A reference state stored in the reference state list which forms a designated failure state of the technical system 2 is not further processed by the calculation unit 1B to generate further intermediate Markov states. A transition from a source state to a target state with a transition rate corresponding to a failure rate λ of a system component cᵢ of the technical system 2 expressed by a bit bᵢ of the Markov state bit vector representing the source state is added to a transition list TL which can also be stored in the memory 1A of the Markov chain generation apparatus 1. A transition from a source state to a target state is added to the stored transition list after replacing the target by its equivalent reference state. Further, the transition rates of a group of symmetric or redundant system components c of the technical system 2 which are expressed by a group of bits of the Boolean Markov state bit vector, BMSBV, representing a source state are summed up by the calculation unit 1B to derive an aggregated transition rate of a transition from the source state to the reference state replacing the target states of the respective transitions. Within the Boolean Markov state bit vector, BMSBV, each cell of the Boolean vector represents a failure mode of the system 2 under investigation. The failure modes may occur, represented by a logic low value, or not occur, represented by a logic high value. If all failure modes have occurred, the system 2 is assumed to have failed. This state corresponds to the Markov state bit vector "000...0" the number of zeros in this Boolean vector corresponds to the number of failure modes of the system 2. All potential intermediate Markov states are developed by stepwise letting the failure modes arise. The intermediate Markov states are generated automatically and in a possible embodiment, the generated intermediate Markov states can be offered or displayed to a user by means of a user interface for additional processing. This may entail accounting for symmetric failure phenomena or enable the allocation of system failure attributes. This can be conducted by replacing a current state of the Markov chain MC by a corresponding reference state. The resulting transition rate is automatically calculated. In a possible embodiment, additional software modules can be provided which facilitate implementing symmetric failure behavior of system components c. This allows to reduce the complexity of the generated Markov chain step by step without the need of being capable of identifying a final layout. Further, this can enable a user to verify and validate intermediate model stages. The Markov chain generation apparatus 1 can comprise a calculation unit such as a processor which is configured to generate recursively intermediate Markov states which are then assigned to corresponding reference states added to the reference state list RSL stored in the memory 1A until the terminal Markov state of the technical system 2 is reached. As a consequence, the complexity of the Markov chain data model MCDM can be reduced step by step by benefiting from symmetric failure properties and by filtering failure states of the system 2 under investigation. The intermediate and verifiable Markov chains can be generated automatically.

In a possible embodiment as illustrated in Fig. 1, the generated Markov chain data model MCDM can be supplied to an analyzing unit 4 which is adapted to transform the received Markov chain data model MCDM automatically into a linear system of differential equations. The analyzing unit 4 can comprise a computation unit which evaluates the linear system of differential equations to calculate availability and/or reliability of the whole technical system 2 or specific system components c within the technical system 2. The calculated availability and/or reliability values of the different system components c can be supplied to the control unit 3. In a possible embodiment, the control unit 3 is adapted to control system components c of the technical system 2 depending on the calculated availability and/or reliability values received from the analyzing unit 4. The control unit 3 can in a possible embodiment control a single specific component c or subgroups or subsystems of the technical system 2 in response to the received availability and/or reliability values. For instance, the control unit 3 can switch on or off specific system components c depending on the calculated availability and/or reliability values.

Fig. 2 shows a schematic view on a stirring unit SU as an exemplary embodiment of a technical system 2 for illustrating the operation of a Markov chain generation apparatus 1 as shown in Fig. 1. The technical system 2 shown in Fig. 2 is a stirring unit SU for a continuous mechanical process. The pipes and supporting structures are not illustrated in Fig. 2 and the figure focuses on the main components c for analyzing the system 2.

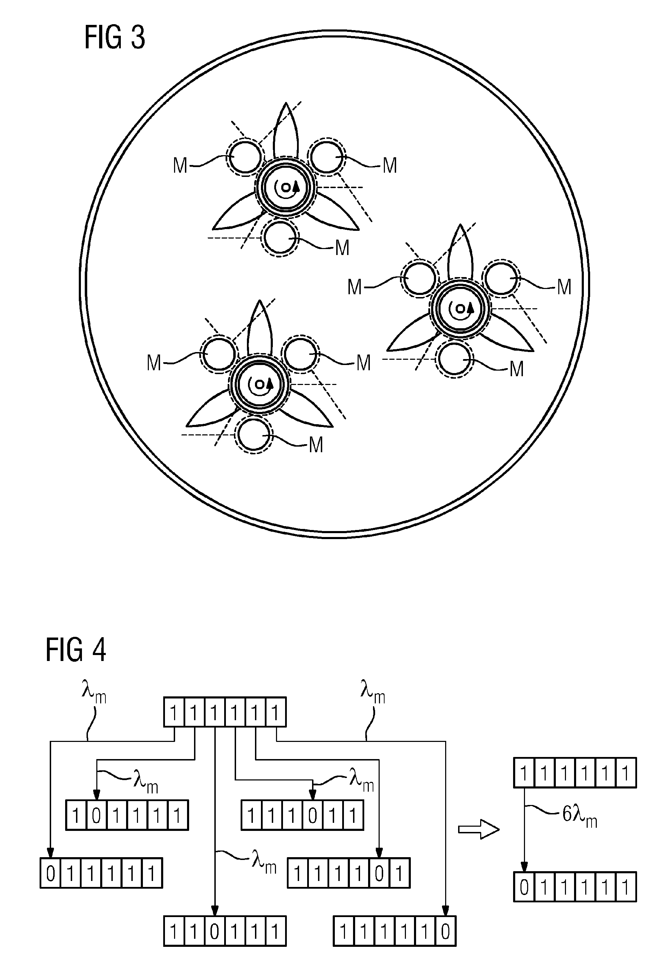

Fig. 3 shows a schematic top view on the stirring system 2 as shown in Fig. 2. As can be seen in Figs. 2, 3, three stirrers forming system components c are driven by electric motors M on every shaft to stir a viscous substance in order to enable a chemical reaction to develop adequately. This requires not only a minimum mechanical power to be inserted into the medium, but also a sufficiently even distribution of the mechanical power in order to ensure homogeneity of the chemical process. As can be seen in Figs. 2, 3, the stirring unit system 2 comprises three shafts SH1, SH2, SH3 each driven by six motors M forming system components c of the technical system 2. The motors M are electric motors which are connected to a bypass control unit BCU 4 having a motor switchboard forming also a component c of the technical system 2.

For such a technical system 2 as illustrated in Figs. 2, 3, a decision table for the stirring with respect to contained motor failures can be set up as follows (Table 1):

| **No.** | **Status of the driving motors** | **System status** |
|---|---|---|
| 1 | More than two defective motors on one shaft | Failure |
| 2 | More than three defective motors in total | Failure |
| 3 | Three defective motors in total AND two defective motors on one stirrer | Failure |
| 4 | Else | OK |

Once a motor M fails, the operating crew can receive a warning and can switch the relevant electric motor M off manually by means of the bypass control unit BCU which controls a switchboard for the motors M. For the sake of simplicity, sensor failures as well as operational errors of the operators are in this example not part of the reliability modeling. A free wheel mechanism may prevent a defective motor M from causing blockage in the vast majority of cases. If a procedure to bypass the defective motors fails due to a fault in the bypass control unit BCU, the entire stirring unit 2 has to be stopped. If one of these scenarios occurs, a service and maintenance team can repair or replace a defective subsystem (motors or bypass control unit) once the stirring unit system 2 stops due to a failure on system level. Accordingly, any of the cases mentioned forms a contained failure. However, a certain probability remains that a defective electric motor M fails in a more troublesome way. Further, it is possible that a free wheel mechanism fails resulting in a severe mechanical damage to other motors, to the supporting structure or to the stirrer shaft SH or its bearings. In any of these cases, the consequences of a defective electric motor M are no longer limited to the motor M itself. This forms a catastrophic or uncontained failure.

In a possible embodiment, a reliability data model for contained failures of the technical system 2 is developed. This includes both failures of the electric motors if the rules of the Decision Table of the stirring unit 2 with respect to contained motor failures are violated as well as switching failures of the bypass control unit BCU if demanded due to a motor defect of a motor M.

The total number of failure modes by summing up 3 x 6 motors M and the single control unit amounts to 19 bits within a Boolean Markov state bit vector.

The second table (Table 2) below shows tolerable failure combinations for the electric motors M of the stirring unit system 2.

| **Line** | **Stirrer 1** | **Stirrer 2** | **Stirrer 3** |
|---|---|---|---|
| #1 | 0 | 0 | 0 |
| #2 | 1 | 0 | 0 |
| #3 | 0 | 1 | 0 |
| #4 | 0 | 0 | 1 |
| #5 | 1 | 1 | 0 |
| #6 | 1 | 0 | 1 |
| #7 | 0 | 1 | 1 |
| #8 | 2 | 0 | 0 |
| #9 | 0 | 2 | 0 |
| #10 | 0 | 0 | 2 |
| #11 | 1 | 1 | 1 |

In order to set up a reliability data model of the system 2 it is necessary to identify equivalent states and equivalent classes. It is apparent that in the stirring unit system 2 symmetry exists on several levels. Firstly, it is irrelevant which of the motors M fails on the same shaft SH. Secondly, it is also irrelevant which stirring shaft SH fails.

By using reference states, it is beneficial to treat all motor failures on one shaft SH equally. Accordingly, equivalent classes are built. Only the number of failures per shaft SH is relevant. The rate for contained failures of an electric motor M is referred to as λₘ.

Fig. 4 illustrates reference states for one failure transition on one stirrer shaft SH of the stirring unit system 2. As can be seen, the stirrer shaft SH comprises six motors M which may fail. The use of reference states simplifies the processing significantly. Instead of taking into account six different reference states, it is sufficient to process only a single reference state as shown on Fig. 4 on the right side. This ensures that the transition on the right side of Fig. 4 takes place with an aggregated transition rate that is sixfold the failure rate of one individual transition. Each transition from a source state (111111) is added to the list of transitions after replacement of the relevant target state by its reference state (011111). The source state (111111) indicates that all six electric motors M are operable or work. The target state (011111) indicates that the first electric motor has failed while all other motors M work. This is acceptable since from a reliability perspective, it does not matter which of the motors M is defective. The reference state is added to the reference state list RSL of Markov states stored in the memory 1A of the Markov chain generation apparatus 1. From all Markov states illustrated in Fig. 4, the reference state (011111) is the only state that is further processed. It forms the source state for all subsequent transitions.

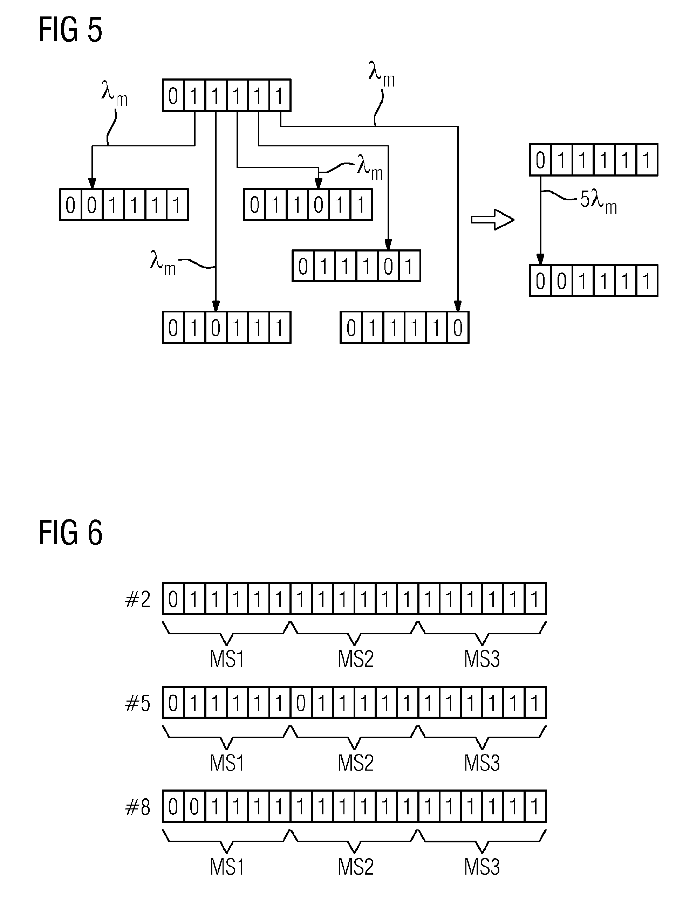

This leads directly to the next step, i.e. the reference state for two failures on one shaft as illustrated in Fig. 5. Fig. 5 illustrates the reference states with two contained failures on one stirrer shaft.

Since one fault has already arisen, only five further components or motors M can fail. Each of these five possible transitions on the left side of Fig. 5 is added to the list of transitions after replacement of the target state by its reference state (001111). This is equivalent to one transition from the source state (011111) to the reference state (001111) with a transition rate that is fivefold the failure rate of a single electric motor M.

Throughout all illustrated examples in the software framework for the generation of Markov chains, the failure states have been sorted to the left given they are in one equivalent class. It is also possible to sort them to the right side or to any other specific position as long as consistent processing is ensured.

In addition to the processing equivalent states within one equivalent class as outlined above, equivalent classes also exist on stirrer level due to symmetry. It does not make a difference on which shaft SH the electric motors M of the stirring unit system 2 have failed. Hence, the system states in lines 2, 3 or 4 in Table 2 can be represented by one reference state, e.g. by the Markov state according to line #2. Furthermore, the states in lines #5, #6 or #7 in the same table can be represented by one reference state according to line #5. Finally, lines #8, #9 or #10 can be represented by one reference state according to line #8 of the table.

The corresponding Boolean bit vectors are illustrated in Fig. 6. It is of note that the illustrated Boolean Markov state bit vectors, BMSBV, comprise 18 bits and therefore only represent the states of all 18 motors M of the three motor stirrers MS of the stirring unit system 2 but not the control unit. Fig. 6 illustrates the reference states for equivalent classes on a stirrer level.

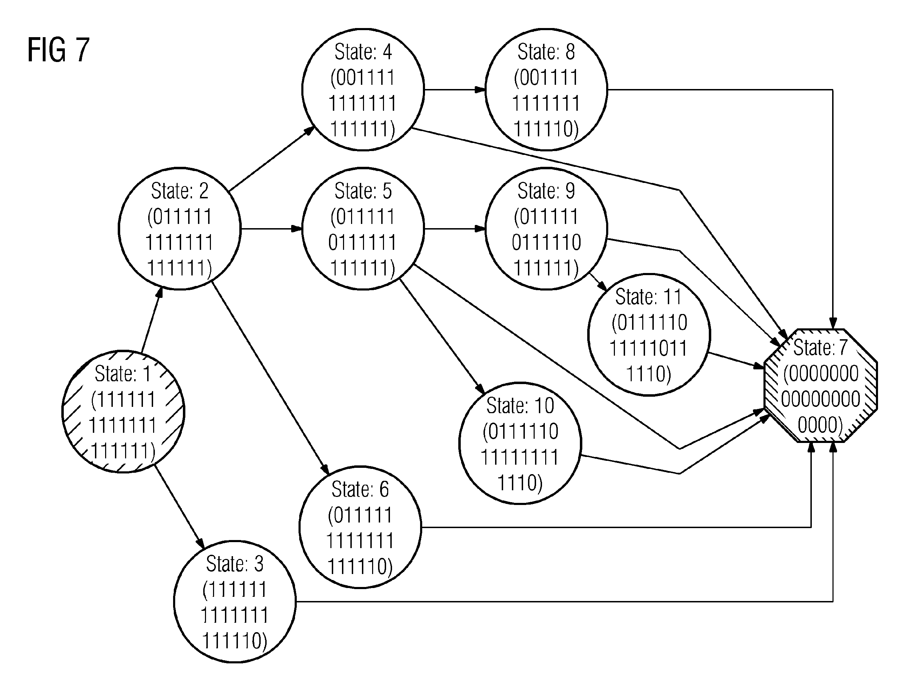

Fig. 7 illustrates a Markov chain for contained failures of the stirring unit system 2 illustrated in Figs. 2, 3. Each system state or Markov state is represented by a Boolean Markov state bit vector having 18 bits corresponding to the 18 motors M of the technical system 2.

Each Markov state represents a certain system state which includes the failure states of its individual components c. Those may or may not lead to an overall system failure state. Every component c or more precisely, every component failure mode, is linked to dedicated binary digits or bits in the Boolean Markov state bit vector, BMSBV. In a closer sense, every bit of the Boolean Markov state bit vector, BMSBV, can represent a component c prone to failure. In a broader sense, every bit b of the Boolean Markov state bit vector, BMSBV, stands for a dedicated failure mode of a component c which may or may not occur. If the failure mode has not occurred yet, the corresponding bit b is set to a logical high value ("1"). If the failure mode appears, the corresponding bit b is set to a logical low value ("0"). In this way of reliability modeling, the entire state of the technical system 2 is represented by means of a Boolean Markov state bit vector, BMSBV. The length of the Boolean Markov state bit vector, BMSBV, corresponds to the number of system components c that may fail or more accurately, to the number of potential failure modes of all related components c of the technical system 2.

The usage of building reference Markov states referred to as reference states is important in order to minimize the number of states in the resulting Markov chain and hence to master the complexity of a complex technical system 2.

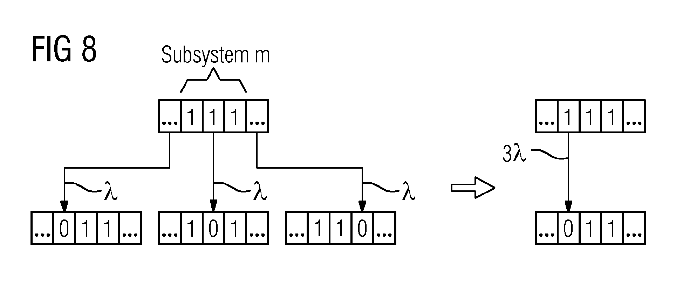

Every bit in the Boolean Markov state bit vector, BMSBV, can represent a failure of a component c or one out of several failure modes of the component, respectively. In order to reduce the complexity of the reliability data model, it is helpful to combine different Markov states into one Markov state if the outcome is equivalent. A complex technical system 2 typically involves redundancy on component or on subsystem level. If two components c are redundant to each other, the overall system only fails if both components c are defective. With respect to the reliability modeling it is irrelevant which of the two components fails, as long as only one failure has occurred in total because the outcome on system level is the same (One component is defective while the other component still works.). Therefore, the overall system 2 is still operational. Accordingly, only one of the bit combinations (10...) or (01...) is used as a reference state in this example. This can be achieved by replacing the Markov state that will not be used any further by the Markov state which is further processed. Fig. 8 illustrates a reference state generation for a subsystem. Three single transitions are replaced by one transition by taking into account that the derived transition's failure rate is the sum of the three single failure rates λ.

The technical system's redundancy can also be prevalent on a subsystem, e.g. due to a symmetry in the layout of the complex technical system 2. In many cases, it is irrelevant which subsystem does fail. Only the number of faulty subsystems is relevant.

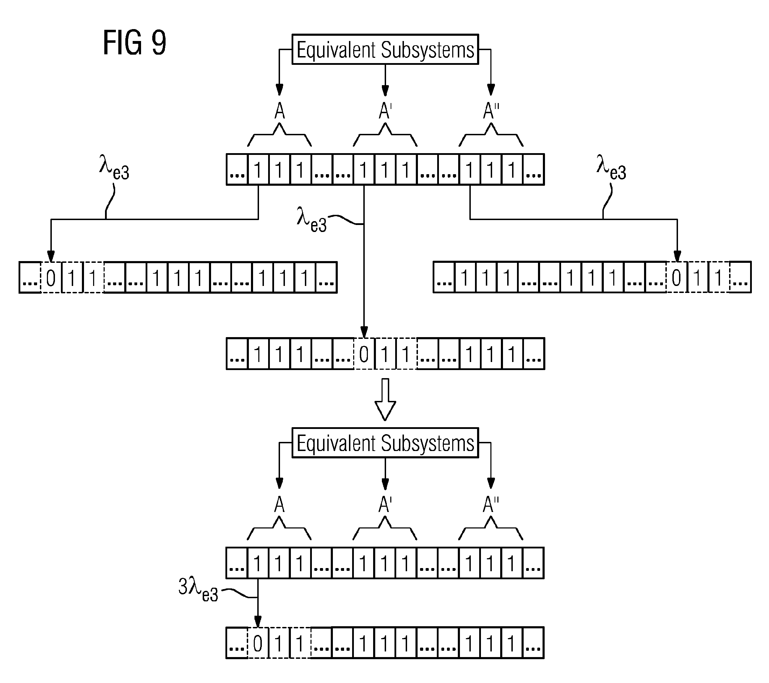

Fig. 9 shows a schematic diagram of a reference state generation for equivalent subsystems A', A" and A"'. Corresponding transitions of the equivalent subsystems A', A" and A'" can be replaced by the transition to their reference state. This target state may be the target state according to the transition of state A'. If implemented accordingly instead of three single transitions there are only one transition from A' to the target of A', however, with a sum of the original failure rates. For example, a production plant 2 can entail three equivalent subsystems. Each subsystem consists of three equivalent motors M driving one shaft as illustrated in Figs. 2, 3. The constant failure rate for all subsystems in this example is λₑ₃=3λₑ₂. On the level of the production plant 2, it is irrelevant which subsystem fails as long as the overall inserted power is sufficient. The resulting transition rate for all three equivalent subsystems amounts to 3λₑ₃₌9λₑ₂.

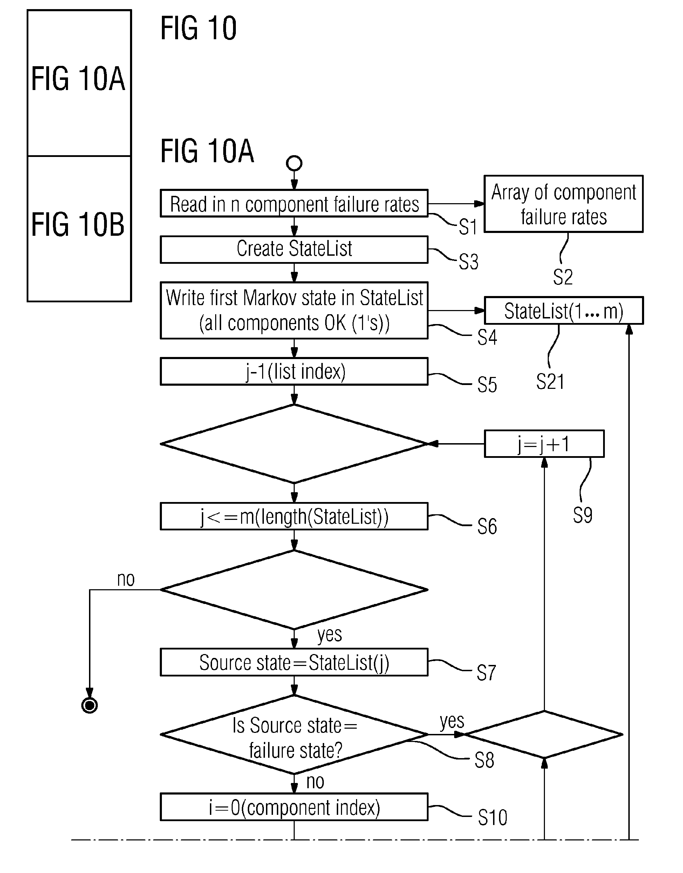

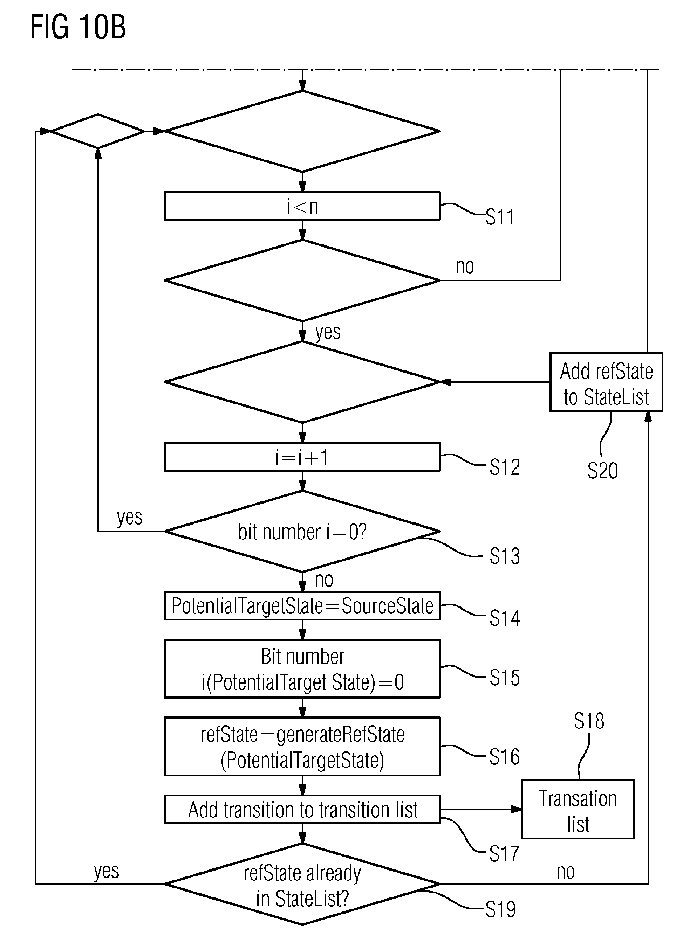

Fig. 10 illustrates a flowchart of a possible exemplary embodiment of a method for generating a Markov chain according to an aspect of the present invention. In the Markov chain generation method according to the present invention, starting from an initial Markov state intermediate Markov states are generated recursively and assigned to equivalent reference states added to a reference state list RSL stored in a memory until a terminal Markov state of the technical system 2 is reached. The method generates a Markov chain with its Markov states and Markov transitions. In the embodiment illustrated in Fig. 10, repair transitions are not considered. Repair transitions can be generated either from existing failure transitions or inverting their sequence or by transitions from all encountered failure rates to the initial Markov state of the system. As can be seen in Fig. 10, in a first step S1, component failure rates λ of the system components c can be read from a database and stored in a dedicated memory in step S2. Further, a state list can be created in step S3, which can contain all reference Markov states after process termination. The created Markov state reference list is opened in step S4 and the initial Markov state is inserted. The initial Markov state represents a system state of the technical system 2 where all system components c of the technical system 2 are operable. The initial Markov state is expressed by a Boolean Markov state bit vector, BMSBV, where all failure modes are set to a first logic high value. This signifies that all components c are working at the beginning of the procedure. At the start, the investigated system 2 is out of failure. The created state list typically grows during generation of the Markov state, but at some point all list entries are entirely processed until they yield only failure states. This will be the case if either the individually programmed functions in the module allocate a failure status bit to the relevant reference state or if all n components c of the system have failed. The latter case corresponds to a parallel system consisting of n components from which n-1 are redundant.

In the embodiment illustrated in Fig. 10, Markov states that are designated failure states are not further processed. If no repair is considered for the technical system 2, it does not matter whether a malfunction system shows additional degradation. On the contrary, if repair work is foreseen, the technical system 2 is often shut down from the moment a failure occurs until it is repaired by a maintenance team. It is therefore assumed that the status of the technical system 2 does not worsen as long as it is shut down for repair works.

In general, the first state of the reference state list RSL is the initial state. All further states are reached through transitions from this initial state to intermediate states and finally to the terminal state or failure states. This process is conducted by systematically letting single additional failures occur and by further processing these potentially new Markov states. Since the method illustrated in Fig. 10 applies to every single entry in the reference state list RSL the complexity of the Markov chain is reduced by using reference states. The reduction of the number of Markov states that have to be evaluated goes hand in hand with a reduction of the processing time.

Therefore, not every Markov state that has been generated by the method as illustrated in Fig. 10 ends up as an entry in the reference state list RSL. This is because once replaced by its reference state it may turn out that the reference state is already part of the reference Markov state list RSL. Then, there is no need to add this reference state to the reference state list RSL.

In any case, the corresponding transition consisting of a source state, a target state (or reference state) is written to a transition list TL. As can be seen in Fig. 10, in step S5, a list index j is set. In step S6, it is checked whether the index j is smaller than m forming the length of the Markov state reference list RSL created in step S3. If the index is smaller than the state list length m, the last entry in the reference state list RSL is assigned to form the source state in step S7 and it is checked in step S8, whether the source state forms a failure state or not. If the source state forms a failure state, the process loops back and the index j is incremented in step S9. On the contrary, if the source state does not form a failure state, the component index i is set to zero in step S10 as shown in Fig. 10. In a further step S11, it is checked, whether the component index i is smaller than the number of components n. If this is not the case, the process returns to step S9 as illustrated in Fig. 10. Otherwise, the component index counter i is incremented in step S12. In S13, it is checked whether the bit number i is 0. If this is the case, the process loops back to step S11 as shown in Fig. 10. Otherwise, the source state is identified in step S14 as a potential target state. The bit number of the potential target state is set to zero in step S15. In a further step S16, the reference state is generated from the potential target state. The transition is added to the transition list TL in step S17 and the transition list TL is stored in a memory in step S18. In a further step S19, it is checked whether the reference state is already stored in the reference state list RSL. If this is the case, the process loops back to step S11 as illustrated in Fig. 10. Otherwise, if the reference state is not yet part of the reference state list RSL, the reference state is added to the reference state list RSL in step S20 as shown in Fig. 10. The updated reference state list RSL is stored in step S21 and the process continues with step S12 as shown in Fig. 10.

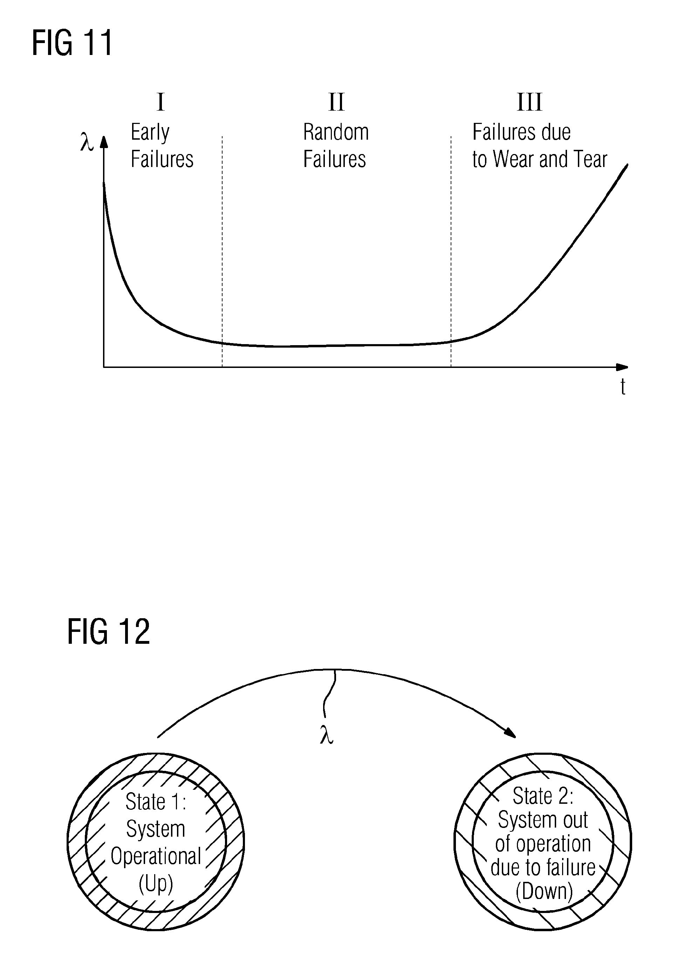

In a preferred embodiment of the method according to the present invention, the failure rates λ used are time-independent. Generally, failure rates λ are time-dependent as shown in Fig. 11. Fig. 11 shows a typical behavior of a technical device with a so-called bathtub curve that describes the failure rates λ(t) over time. Early failures occurring during phase I, random failures occurring mostly during phase II, and degradation failures dominate during phase III. In phase II, it can be assumed that the failure rate λ is approximately constant and hence remains under a certain threshold. In a possible embodiment of the method according to the present invention, constant failure rates λ are used. In an alternative embodiment, a time dependency of a failure rate (λ) can also be considered. In this embodiment, the generated Markov chain data model MCDM reflects the behavior of the technical system 2 at a specific point in time. In a possible embodiment, the constant failure rate λ can be calculated from the mean operating time between failures MTBF being its reciprocal value. The failure rate λ and the mean operation time between failures are easily convertible since they form each other's reciprocal value. The same holds for the repair rate µ and the mean down time MDT in case of an exponential distribution. With the method and apparatus according to the present invention it is possible to calculate a reliability and/or availability of a complex technical system 2 and its system components c. The reliability is the probability that an item or component can perform a required function under given conditions for a given time interval. The instantaneous availability is the probability that an item or component is in a state to perform a required function under given conditions at a given instant of time assuming that the required resources are provided. Availability can be calculated as the mean value of the instantaneous availability under steady-state conditions over a given time interval.

In a possible embodiment of the system illustrated in Fig. 1, the Markov chain generation apparatus 1, the analyzing unit 4 and the control unit 3 can be integrated into a control apparatus of the technical system 2. In a possible embodiment, the Markov chain generation method such as illustrated in the embodiment shown in Fig. 10 can be performed by a program executed by a microprocessor of a processing unit. In a possible embodiment, the method is performed in a planning stage of the technical system 2 to simulate the availability and/or reliability of the whole technical system 2 or system components of the technical system 2. In an alternative embodiment, the generation of the Markov chain data model MCDM and the generation of the resulting control signals on the basis of the Markov chain data model MCDM are performed during runtime of an implemented technical system 2. In a possible embodiment, sensor data of sensors within the technical system 2 are also evaluated to update or modify the generated Markov chain data model MCDM. In a possible embodiment, the method for generating a Markov chain data model MCDM is performed by a software framework support tool during development or preparation of a reliability analysis of a technical system 2.

## Claims

1. A Markov chain generation method for generation of a Markov chain data model, MCDM, of a technical system (2) consisting of system components (c),
wherein each system state of said technical system (2) is represented by a Markov state expressed by a Boolean Markov state bit vector, BMSBV, indicating failure modes of the system components (c) of said technical system (2), wherein starting from an initial Markov state intermediate Markov states are generated recursively and assigned to equivalent reference states added to a reference state list, RSL, stored in a memory until a terminal Markov state of said technical system (2) is reached.

2. The method according to claim 1, wherein the initial Markov state represents a system state of the technical system (2) where all system components (c) of the technical system (2) are operable, wherein the initial Markov state is expressed by a Boolean Markov state bit vector, BMSBV, where all failure modes are set to a first logic value (H).

3. The method according to claim 1, wherein the terminal Markov state represents a system state of said technical system (2) where all system components (c) of the technical system (2) are inoperable, wherein the terminal Markov state is expressed by a Boolean Markov state bit vector, BMSBV, where all failure modes are set to a second logic value (L).

4. The method according to one of the preceding claims 1 to 3, wherein a reference state stored in the reference state list, RSL, which forms a designated failure state of said technical system (2) is not further processed to generate further intermediate Markov states.

5. The method according to one of the preceding claims 1 to 4, wherein a transition from a source state to a target state with a transition rate corresponding to a failure rate of a system component of said technical system (2) expressed by a bit of the Boolean Markov state bit vector, BMSBV, representing the source state is added to a transition list stored in a memory.

6. The method according to claim 5, wherein a transition from a source state to a target state is added to the stored transition list after replacing of the target state by its equivalent reference state.

7. The method according to one of the preceding claims 5, 6, wherein transition rates of a group of symmetric or redundant system components (c) of said technical system (2) expressed by a group of bits of the Boolean Markov state bit vector, BMSBV, representing a source state are summed up to derive an aggregated transition rate of a transition from the source state to the reference state replacing the target states of the respective transitions.

8. The method according to one of the preceding claims 1 to 7, wherein the generated Markov chain data model, MCDM, comprising the reference state list, RSL, and the transition list, TL, is transformed to a linear system of differential equations which is evaluated to calculate an availability and/or a reliability of said technical system (2).

9. The method according to one of the preceding claims 1 to 8, wherein component failure rates (λ) of the system components (c) are read from a database and stored in a dedicated array.

10. The method according to one of the preceding claims 1 to 9, wherein the generated Markov chain data model, MCDM, of the technical system (2) comprises a time-continuous Markov chain having Markov states including failure states of system components of said technical system.

11. A Markov chain generation apparatus (1) adapted to generate a Markov chain data model, MCDM, of a technical system (2) consisting of system components (c),
wherein each system state of said technical system (2) is represented by a Markov state expressed by a Boolean Markov state bit vector, BMSBV, indicating failure modes of the system components (c) of said technical system (2), said Markov chain generation apparatus (1) comprising:
- a memory (1A) which stores component failure rates (λ) of the system components (c) and
- a calculation unit (1B) adapted to generate recursively starting from an initial Markov state of the technical system (2) intermediate Markov states assigned to reference states added to a reference state list, RSL, stored in said memory (1A) until a terminal Markov state of said technical system (2) is reached.

12. The apparatus according to claim 11, wherein the initial Markov state represents a system state of said technical system (2) where all system components (c) of the technical system (2) are operable, wherein the initial Markov state is expressed by a Boolean Markov state bit vector, BMSBV, where all failure modes are set to a first logic value (H), and
wherein the terminal Markov state represents a system state of said technical system (2) where all system components (c) of the technical system (2) are inoperable, wherein the terminal Markov state is expressed by a Boolean Markov state bit vector, BMSBV, where all failure modes are set to a second logic value (L).

13. The apparatus according to claim 11 or 12, wherein a reference state stored in the reference state list, RSL, which forms a designated failure state of said technical system (2) is not further processed by said calculation unit (1B) to generate further intermediate Markov states.

14. The apparatus according to one of the preceding claims 11 to 13, wherein a transition from a source state to a target state with a transition rate corresponding to a failure rate of a system component of said technical system (2) expressed by a bit of the Boolean Markov state bit vector, BMSBV, representing the source state is added by said calculation unit (1B) to a transition list, TL, stored in the memory (1A).

15. The apparatus according to claim 14, wherein a transition from a source state to a target state is added by said calculation unit (1B) to the stored transition list, TL, after replacing of the target state by its equivalent reference state is performed by said calculation unit (1B).

16. The apparatus according to claim 15, wherein transition rates of a group of symmetric or redundant system components (c) of said technical system (2) expressed by a group of bits of the Boolean Markov state bit vector, BMSBV, representing a source state are summed up by said calculation unit (1B) to derive an aggregated transition rate of a transition from the source state to the reference state replacing the target states of the respective transitions.

17. The apparatus according to one of the preceding claims 11 to 16, comprising an analyzing unit (4) adapted to transform automatically the generated Markov chain data model, MCDM, comprising the reference state list, RSL, and the transition list, TL, to a linear system of differential equations which is evaluated by said analyzing unit (4) to evaluate an availability and/or reliability of the investigated technical system (2).

18. The apparatus according to one of the preceding claims 11 to 17, wherein the generated Markov chain data model, MCDM, of the technical system (2) comprises a time-continuous Markov chain having Markov states including failure states of system components (c) of the technical system (2).

19. A technical system (2) comprising a plurality of system components (c), wherein each system state of the technical system (2) is represented by a Markov state expressed by a Boolean Markov state bit vector, BMSBV, indicating failure modes of the system components (c), said technical system (2) comprising:
- a Markov chain generation apparatus (1) according to one of the preceding claims 11 to 16 configured to generate automatically a Markov chain data model, MCDM, of said technical system (2) stored in a database, and
- an analyzing unit (4) adapted to transform automatically the generated Markov chain data model, MCDM, stored in the database into a linear system of differential equations and further adapted to evaluate the linear system of differential equations to calculate an availability and/or a reliability of system components (c) of said technical system (2).

20. The technical system according to claim 19, wherein the technical system (2) further comprises a control unit (3) adapted to control system components (c) of said technical system (2) depending on the calculated availability and/or reliability of the respective system components.
